# EUROPEAN PATENT SPECIFICATION

(11) **EP 1 486 123 B1**
(45) Date of publication and mention of the grant of the patent: **21.06.2006**
(21) Application number: 03027075.5
(22) Date of filing: 25.11.2003
(51) Int. Cl.: A22C 7/00

(54) **Assembly for dosing edible meat**
Portioniervorrichtung
Dispositif de dosage

(30) Priority: 12.06.2003 IT PR20030045
(43) Date of publication of application: 15.12.2004
(73) Proprietor: Bonicomm S.r.l., 43022 Montechiarugolo (IT)
(72) Inventor: Boni, Franco, 43024 Neviano Degli Arduini (Parma) (IT)
(74) Representative: Gotra, Stefano

(56) References cited:
- DE-A- 1 632 096
- GB-A- 1 154 135
- US-A- 3 722 034
- US-A- 4 530 132
- US-A- 4 868 002
- US-A- 5 198 237

## Description

The present invention relates to an assembly for dosing edible meat.

As is well known, in the food industry of the production of tinned meat, the meat is in the form of blocks and/or loaves which must be processed, by means of appropriate cuts, to be re-dimensioned and shaped in such a way as to define pre-dosed portions of meat which are subsequently tinned.

Currently, in the industry of processing tinned tuna fish, there are plants which are provided with a conveyor belt, whereon are laid the blocks of meat to be treated. Said blocks are pressed against each other by means of a plurality of rollers positioned to the sides of the conveyor belt.

The blocks of meat, once they are pressed against each other, define a single loaf of meat which is subsequently thrust, also by means of the rollers, into a chamber, or dosing assembly, provided with blades.

Specifically, the blades cut the cross section of the loaf, in such a way as to shape it according to cylindrical blocks, or "tablets", having usually circular section and predetermined dimensions.

At the output of the dosing assembly is usually present a carrousel provided with a plurality of housings, so shaped as to house the meat blocks and to transfer them to subsequent tinning and processing stations.

From document US 3722034, in the forming or extrusion of comminuted material products, such as meat loaf products, through a forming or extruder horn onto a receiving surface, such as a conveyor, a knife is supported for movement adjacent the horn outlet and between the horn and receiving surface for severing the formed or extruded material. If the forming or extruding apparatus is operated intermittently, the knife is automatically actuated in response to the stopping of the former or extruder.

The dosing assemblies outlined above have the important drawback of being complex to build, since they require the presence of blades in continuous and precise motion, in order to shape the blocks of meat according to predetermined formats, suitable for tinning.

Another drawback of such dosing assemblies is that obtaining "tablets" of meat with circular section starting from loaves of meat having rectangular section produces considerable quantities of "scraps" or product. The latter are constituted by the meat which, although it is comprised in the cross section of the loaf, is outside the area of the circular section defining the meat tablet.

An object of the present invention is to make available a dosing assembly that is capable of treating edible meat, in particular of tuna fish, without the need to use blades to cut the cross section of a loaf, in order to obtain cylindrical blocks, or "tablets", of predetermined dimensions and preferably having circular cross section.

A further object of the present invention is to propose a dosing assembly which is simple to construct, reliable and economical to produce and embody.

Said objects are fully achieved by the assembly for dosing edible meat of the present invention, which are characterised by the content of the claims set out below.

These and other objects shall become more readily apparent from the description that follows of a preferred embodiment, illustrated purely by way of non limiting example in the accompanying drawing tables in which:

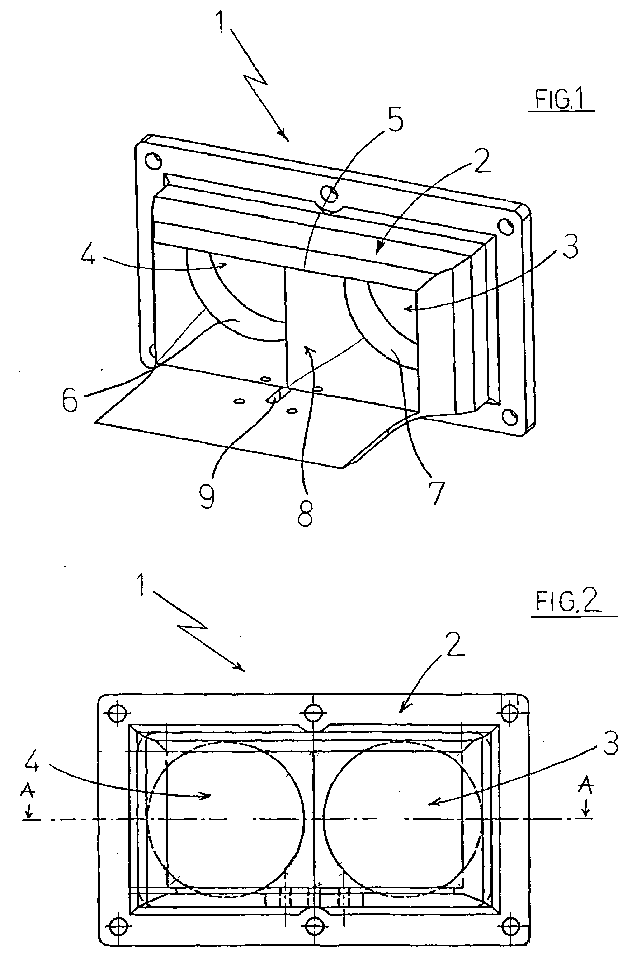

- Figure 1 shows an axonometric view of an assembly for dosing edible meat in accordance with the present invention,
- Figure 2 shows a front view of the dosing assembly shown in Figure 1;

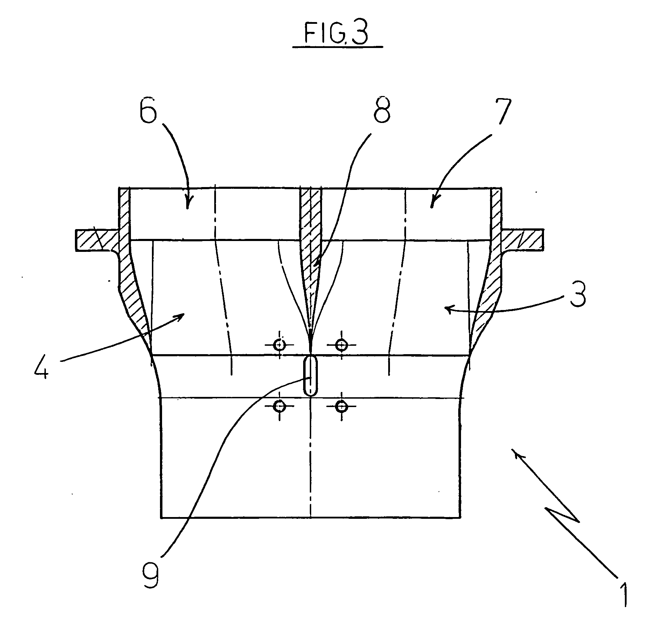

- Figure 3 shows a section view of the dosing assembly of Figure 1, according to the trace A-A of Figure 2.

With reference to the figures, the assembly for dosing edible meat in accordance with the invention is globally designated by the number 1.

The dosing assembly 1 originally comprises at least a drawing body 2 provided with at least an extrusion channel 3 for a loaf of meat (not shown).

In an embodiment that is not illustrated herein, the dosing assembly 1 is operatively associated to means for keeping the loaf of meat against the drawing body 2, to enable extrusion, and to means for cutting the loaf of meat exiting the extrusion channel 3. In particular, the latter means cut the loaf of meat according to blocks, or tablets, of predetermined thickness and having a cross section that is substantially counter shaped relative to a cross section of the extrusion channel 3.

In the illustrated example, the drawing body 2 comprises a pair of extrusion channels 3, 4 having a single inlet 5 for the loaf of meat and a pair of outlets 6, 7.

In particular, the inlet 5 of the extrusion channels 3, 4 has a substantially rectangular cross section, whilst each outlet 6, 7 of each channel 3, 4 has a substantially circular cross section.

In an alternative embodiment, not shown herein, the dosing assembly 1 may be provided with a single extrusion channel fitted with an inlet with rectangular cross section and an outlet with substantially circular cross section.

Both extrusion channels 3, 4 are preferably diverging along a direction of advance of the loaf of meat, between the inlet 5 and the outlets 6, 7.

The drawing body 2 is provided with at least a blade (not shown) to cut into the loaf and facilitated a subdivision into two sub-loaves by a separating plate 8. Each of the two sub-loaves can thus advance through a corresponding extrusion channel 3, 4. In particular, the length of the blade is substantially coinciding with a width of the separating plate 8 and enters the dosing assembly 1 in correspondence with the plate itself, by sliding inside a slot 9.

In the preferred embodiment, the dosing assembly 1 is associated to a processing station, co-operating with means for feeding the meat to be treated to said station.

Said means comprise at least a conveyor belt which advances in discrete fashion and whereon is laid the meat to be treated in the form of blocks of predetermined dimensions.

Said blocks of meat are arranged according to a single loaf which is pressed against the drawing body 2 by means of at least a pair of vertical conveyor belts which face each other (known in themselves and not illustrated herein) which laterally clench the blocks of meat. In correspondence with the dosing assembly is preferably present a roller which compresses the blocks of meat, pressing them against the conveyor belt whereon they are laid.

In the preferred embodiment, the means for cutting the loaf of meat exiting the extrusion channel 3 comprise a first rotating disk (not illustrated) provided with a plurality of through pits, within which are inserted the sub-loaves exiting the dosing assembly.

The disk, rotating from an angular position in which the pits are substantially aligned to the outlets 6, 7 of the dosing assembly 1, to a position in which the pits are rotated by about 180° about an axis of rotation of the disk, determines the cutting of the sub-loaves and the consequent formation of pre-dosed tablets which remain inside the pits.

Subsequently, a plurality of ejector elements (not illustrated) eject the meat tablets from the pits of the first disk, making them slide within cans inserted in corresponding can-bearing housings of a second disk which is preferably coaxial to the first.

The operation of the invention is as follows.

The meat blocks to be treated are laid onto the conveyor belt and are compacted in a single loaf by the pair of vertical, mutually facing conveyor belts.

The latter, in addition to compacting the blocks of meat, thrust the loaf into the drawing body 2 and thence into the extrusion channels 3, 4. The latter, by effect of the drawing, shape the meat into "tablets" having substantially circular section or anyway counter-shaped relative to the cross section of the outlets 6, 7.

The thickness of the "tablets" is determined by the quantity of meat which exits the extrusion channels 3, 4 before the cut effected by the first disk.

The blade positioned in correspondence with the separating plate 8 cuts into the loaf of meat, in order to facilitate the subdivision into two sub-loaves by the separating plate 8.

The meat "tablets" extruded by the dosing assembly and removed by the carrousel are subsequently sent to a tinning station (not shown).

The invention achieves important advantages.

First of all, the dosing assembly 1 allows to reduce product scraps, since the loaf of meat occupies the entire passage section of the extrusion channels 3, 4 and consequently the entire cross section of the loaf is involved in the shaping according to blocks or "tablets" of predetermined dimensions.

Secondly, a dosing assembly and a method in accordance with the invention are extremely simple to construct and implement, since the dosing assembly employs no blades in rapid motion to shape the cross section of the loaf of meat and the method requires no particular contrivance or calibration.

Advantageously, the presence of multiple extrusion channels allows considerably to increase the productivity of the installation in which the dosing assembly 1 is inserted.

## Claims

1. An assembly (1) for dosing edible meat, comprising at least a drawing body (2) provided with at least an extrusion channel (3;4) for a loaf of meat, **characterised in that** the extrusion channel (3;4) is provided with an inlet (5) having a substantially rectangular cross section and an outlet (6;7) having substantially circular cross section.

2. A dosing assembly as claimed in claim 1, **characterised in that** it is operatively associated to:
means for pressing a loaf of meat against the drawing body (2) to allow extrusion;
means for cutting the loaf of meat exiting the extrusion channel (3;4) to obtain blocks of meat of predetermined thickness and having their cross section substantially counter-shaped to a cross section of the extrusion channel (3).

3. A dosing assembly as claimed in claim 1, **characterised in that** the drawing body (2) comprises a pair of extrusion channels (3;4) having a single inlet (5) for the loaf of meat to be extruded and a pair of outlets (6;7).

4. A dosing assembly as claimed in claim 3, **characterised in that** the inlet (5) of the extrusion channels (3;4) has substantially rectangular cross section, whilst each outlet (6;7) of each channel (3;4) has substantially circular cross section.

5. A dosing assembly as claimed in claims 1 or 3, **characterised in that** each extrusion channel (3;4) diverges along a direction of advance of the loaf of meat, between an inlet (5) and an outlet (6;7).

6. A dosing assembly as claimed in claim 3, **characterised in that** the drawing body (2) comprises at least a blade to divide the loaf into two sub-loaves, each of which advances through a corresponding extrusion channel (3;4).

7. A dosing assembly as claimed in claim 1, **characterised in that** it is associated to a processing station co-operating with means for feeding the meat to be treated to the station.

8. A dosing assembly as claimed in claim 7, **characterised in that** said feeding means comprise at least a conveyor belt.

9. A dosing assembly as claimed in claim 8, **characterised in that** the conveyor belt has discrete advancement.

10. A dosing assembly as claimed in claim 2, **characterised in that** it is associated to means for arranging the meat according to a single loaf.

11. A dosing assembly as claimed in claim 9, **characterised in that** said means for arranging the meat according to a single loaf and the means for pressing the loaf of meat against the drawing body (2) coincide and comprise at least a pair of vertical and mutually facing conveyor belts, which laterally clench the blocks of meat.

## Patentansprüche

1. Portioniervorrichtung (1) umfassend mindestens einen Ziehkörper (2), der mindestens einen Extrusionskanal (3; 4) für eine Fleischmasse aufweist; **dadurch gekennzeichnet, dass** der Extrusionskanal (3; 4) einen im Querschnitt im wesentlichen rechteckigen Eintritt (5) und einen im Querschnitt im wesentlichen kreisförmigen Austritt (6; 7) aufweist.

2. Portioniervorrichtung nach Anspruch 1, **dadurch gekennzeichnet, dass** sie wirkverbunden ist mit:
Mitteln zum Drücken einer Fleischmasse gegen den Ziehkörper (2) zum Zwecke der Extrusion;
Mitteln zum Schneiden der aus dem Extrusionskanal (3; 4) austretenden Fleischmasse, um Fleischblöcke von vorbestimmter Dicke zu erhalten, deren Querschnitt im wesentlichen gegengleich zu einem Querschnitt des Extrusionskanals (3) ausgebildet ist.

3. Portioniervorrichtung nach Anspruch 1, **dadurch gekennzeichnet, dass** der Ziehkörper (2) ein Paar Extruksionskanäle (3; 4) umfasst, welche einen einzigen Eintritt (5) für die zu extrudierende Fleischmasse und ein Paar Austritte (6; 7) umfasst.

4. Portioniervorrichtung nach Anspruch 3, **dadurch gekennzeichnet, dass** der Eintritt (5) der Extrusionskanäle (3;4) im Querschnitt im wesentlichen rechteckig ausgebildet ist, während die einzelnen Austritte (6; 7) der einzelnen Kanäle (3; 4) einen im wesentlichen kreisförmigen Querschnitt aufweisen.

5. Portioniervorrichtung nach Anspruch 1 oder 3, **dadurch gekennzeichnet, dass** die einzelnen Extrusionskanäle (3; 4) entlang einer Vorschubrichtung der Fleischmasse zwischen einem Eintritt (5) und einem Austritt (6; 7) auseinandergehen.

6. Portioniervorrichtung nach Anspruch 3, **dadurch gekennzeichnet, dass** der Ziehkörper (2) mindestens eine Schneide zum Teilen der Masse in zwei Teilmassen umfasst, die jeweils durch einen entsprechenden Extrusionskanal (3; 4) treten.

7. Portioniervorrichtung nach Anspruch 1, **dadurch gekennzeichnet, dass** sie einer Verarbeitungsstation zugeordnet ist, welche mit Mitteln zum Zuführen des zu verarbeitenden Fleisches zu der Station zusammenarbeitet.

8. Portioniervorrichtung nach Anspruch 7, **dadurch gekennzeichnet, dass** die genannten Zuführmittel mindestens ein Förderband umfassen.

9. Portioniervorrichtung nach Anspruch 8, **dadurch gekennzeichnet, dass** das Förderband einen diskreten Vorschub aufweist.

10. Portioniervorrichtung nach Anspruch 2, **dadurch gekennzeichnet, dass** es Mitteln zum Anordnen des Fleisches in einer Masse zugeordnet ist.

11. Portioniervorrichtung nach Anspruch 9, **dadurch gekennzeichnet, dass** die genannten Mittel zum Anordnen des Fleisches in einer Masse und die Mittel zum Drücken der Fleischmasse gegen den Ziehkörper (2) übereinstimmen und mindestens ein Paar senkrechter und einander zugewandter Förderbänder umfassen, welche seitlich auf die Fleischblöcke einwirken.

## Revendications

1. Dispositif de dosage (1) de viande alimentaire, **caractérisé en ce qu'**il comprend au moins un corps (2) d'étirage pourvu d'au moins un canal d'extrusion (3, 4) pour un boudin de viande; **caractérisé en ce que** le canal d'extrusion (3; 4) est pourvu d'une entrée (5) ayant une section transversale substantiellement rectangulaire et une sortie (6, 7) ayant une section transversale substantiellement circulaire.

2. Dispositif de dosage selon la revendication 1, **caractérisé en ce qu'**il est opérationnellement associé à:
- des moyens de pression d'un boudin de viande contre le corps d'étirage (2) pour permettre l'extrusion;
- des moyens de coupe du boudin de viande sortant du canal d'extrusion (3; 4) pour obtenir des blocs de viande d'épaisseur prédéterminée, et ayant leur section transversale substantiellement en contre-dépouille par rapport à une section transversale du canal d'extrusion (3).

3. Dispositif de dosage selon la revendication 1, **caractérisé en ce que** le corps d'étirage (2) comprend une paire de canaux d'extrusion (3; 4) ayant une entrée unique (5) pour le boudin de viande à extruder et une paire de sorties (6; 7).

4. Dispositif de dosage selon la revendication 3, **caractérisé en ce que** l'entrée (5) des canaux d'extrusion (3, 4) présente une section transversale substantiellement rectangulaire, alors que chaque sortie (6, 7) de chaque canal (3, 4) présente une section substantiellement circulaire.

5. Dispositif de dosage selon les revendications 1 ou 3, **caractérisé en ce que** chaque canal d'extrusion (3;4) est divergent le long d'une direction d'avancement du boudin de viande, entre une entrée (5) et une sortie (6, 7).

6. Dispositif de dosage selon la revendication 3, **caractérisé en ce que** le corps d'étirage (2) comprend au moins une lame pour diviser le boudin en deux sub-boudins, chacun desquels avance au travers d'un canal d'extrusion (3, 4) correspondant.

7. Dispositif de dosage selon la revendication 1, **caractérisé en ce qu'**il est associé à une station de traitement coopérant avec des moyens d'alimentation de la viande à traiter à cette station.

8. Dispositif de dosage selon la revendication 7, **caractérisé en ce que** lesdits moyens d'alimentation comprennent au moins un tapis roulant.

9. Dispositif de dosage selon la revendication 8, **caractérisé en ce que** le tapis roulant a un avancement de type discret.

10. Dispositif de dosage selon la revendication 2, **caractérisé en ce qu'**il est associé à des moyens pour disposer la viande selon un unique boudin.

11. Dispositif de dosage selon la revendication 9, **caractérisé en ce que** lesdits moyens pour disposer la viande selon un unique boudin et les moyens de pression du boudin contre le corps d'étirage (2) coïncident et comprennent au moins une paire de tapis roulants verticaux et se faisant face, qui serrent latéralement les blocs de viande.
